# EUROPÄISCHE PATENTSCHRIFT

(11) **EP 1 448 695 B1**
(45) Veröffentlichungstag und Bekanntmachung des Hinweises auf die Patenterteilung: **17.01.2007**
(21) Anmeldenummer: 02781285.8
(22) Anmeldetag: 24.10.2002
(51) Int. Cl.: C08K 5/57, C08K 5/58, B01J 31/12, B01J 31/18

(54) **UNTER ABSPALTUNG VON ALKOHOLEN AUS ALKOXYSILYLENDGRUPPEN ZU ELASTOMEREN VERNETZBARE MASSEN**
MATERIALS WHICH ARE CROSS-LINKABLE BY ABSTRACTING ALCOHOLS FROM ALKOXY SILYL TERMINAL GROUPS TO FORM ELASTOMERS
MASSES RETICULABLES EN ELASTOMERES PAR SEPARATION D'ALCOOLS A PARTIR DE GROUPES ALCOXYSILYLE TERMINAUX

(30) Priorität: 29.11.2001 DE 10158520
(43) Veröffentlichungstag der Anmeldung: 25.08.2004
(73) Patentinhaber: Wacker Chemie AG, 81737 München (DE)
(72) Erfinder: SCHEIM, Uwe, 01640 Coswig (DE); DINEIGER, Gabriele, 01662 Meissen (DE); ZICHE, Wolfgang, 01619 Röderau-Bobersen (DE); FINGER, Christian, 84453 Mühldorf (DE)
(74) Vertreter: Fritz, Helmut
(86) Internationale Anmeldenummer: PCT/EP2002/011922
(87) Internationale Veröffentlichungsnummer: WO 2003/046069

(56) Entgegenhaltungen:
- EP-A- 0 528 508
- WO-A-97/10271
- DE-C- 19 533 963
- GB-A- 1 348 402
- US-A- 3 525 778

## Beschreibung

Die Erfindung betrifft Zinnkatalysator und aliphatischen Alkohol enthaltende unter Abspaltung von Alkoholen aus Alkoxysilylendgruppen zu Elastomeren vernetzbare Massen.

Unter Abspaltung von Alkoholen aus Alkoxysilylendgruppen zu Elastomeren vernetzbare Massen, wie unter Abspaltung von Alkoholen zu Elastomeren vernetzbare einkomponentige Organopolysiloxanmassen (RTV-1-Alkoxymassen) benötigen zur Vernetzung Katalysatoren.

Die Verwendung von Dialkylzinn (IV) verbindungen als Kondensationskatalysatoren in RTV-1- und RTV-2-Siliconkautschuken ist allgemein bekannt. In RTV-1-Alkoxymassen haben diese Zinnverbindungen allerdings den Nachteil, dass sie eine unerwünschte Spaltung der Siloxanketten durch Alkoholspuren (Equilibrierung) ebenfalls katalysieren. Diese geringe Mengen an Alkohol enstehen bei der Compoundierung durch Hydrolyse der als Vernetzer eingesetzten Alkoxysilane mit Wasser, welches duch die Rohstoffe eingeschleppt wird. Bei der Equilibrierung entstehen nicht mehr vernetzungsfähige Monoalkoxyendgruppen an der Polysiloxankette. Dadurch wird eine ausreichende Vernetzung der Masse verhindert, d.h. daß bei der bestimmungsgemäßen Verwendung entweder gar kein oder zumindest kein mechanisch ausreichend stabiles Vulkanisat erhalten wird. Die Lagerstabilität, angegeben als Zeitdauer, die die RTV-1-Alkoxymasse gelagert werden kann, ohne ihre Eigenschaften merklich zu verlieren, wird durch die Equilibrierung drastisch verringert.

Gleichartige Probleme gibt es auch bei anderen unter Abspaltung von Alkoholen zu Elastomeren vernetzbaren Systemen, wie bei Polyethern mit Alkoxysilylendgruppen. Auch dort treten aufgrund der verwendeten Dialkylzinn(IV)verbindungen als Kondensationskatalysatoren Lagerstabilitätsprobleme auf, die durch eine besonders umstähdliche Herstellprozedur, wie Ausheizen der Polymer-Füllstoffmischungen im Vakuum über Stunden, unterdrückt werden.

Um die Lagerstabilität zu verbessern, sind bei RTV-1-Alkoxymassen verschiedene Verfahren entwickelt worden. Zunächst wurde beispielsweise in EP-A-69 256 versucht, die Alkoholspuren durch den Zusatz von Verbindungen zu beseitigen, die mit dem Alkohol irreversibel reagieren. Solche Verbindungen werden als Scavenger bezeichnet.

Darüber hinaus hat man auch versucht scavengerfreie Mischungen herzustellen. Insbesondere eignen sich hierzu die in US-A-5,674,936 beschriebenen Titan- oder Zirkoniumkatalysatoren. Diesen Katalysatoren haftet aber der entscheidende Nachteil an, dass sie entweder stark zur Vergilbung neigen, oder sogar selbst schon gelb gefärbt sind. Dadurch wird die Herstellung von transparenten, farblosen RTV1-Mischungen verhindert. Diese Mischungen sind es aber gerade, die am meisten verlangt werden, da sie universell einsetzbar sind.

Darüber hinaus ist die Verwendung von Verbindungen mit Sn-O-P-Bindungen, erhalten aus Phosphorsäurediestern, bekannt aus beispielsweise US-A-3,525,778.
Die aus der Literatur bekannten Zinnkatalysatoren bewirken bei ihrem Einsatz in Polysiloxanmassen jedoch die oben beschriebenen Polymerabbaureaktionen. Dies äußert sich beispielsweise in dem Verlust bzw. der Verlangsamung der Vernetzungsfähigkeit von RTV-1 Produkten.

Eine weitere Verbesserung stellt die in US-A-6,162,756 beschriebene Verwendung von Katalysatoren mit Sn-O-P-Bindungen dar, die durch Umsetzung von Phosphorsäuremonoestern mit organischen Zinnverbindungen erhalten werden. Es hat sich jedoch gezeigt, dass durch die sehr hohe Säurezahl der eingesetzten Phosphorverbindungen, dadurch bedingt, dass sich die Erfindung auf den Einsatz von Phosphorsäuremonoestern beschränkt, die mindestens in equimolaren Mengen zur Zinnverbindung oder im Überschuss eingesetzt werden müssen, Probleme bei Lagerstabilität und Haftungsprobleme verursacht werden, die insbesondere bei Wasserlagerung der Verklebungen zu Tage treten.

Der Erfindung liegt die Aufgabe zugrunde, Katalysatoren für unter Abspaltung von Alkoholen aus Alkoxysilylendgruppen zu Elastomeren vernetzbare Massen mit guter Lagerstabilität bereitzustellen.

Gegenstand der Erfindung sind Zinnkatalysator (Z) enthaltende, unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist,
wobei die Zinnverbindung (Z) erhältlich ist durch Umsetzung von mit P=O Gruppe aufweisender Phosphorverbindung, die ausgewählt wird aus Phosphorverbindung der allgemeinen Formel (I)

O=PR¹ₘ(OR²)ₙ(OH)₃₋₍ₘ₊ₙ₎ (I),

in der
- **m**: die Werte 0, 1, 2 oder 3,
- **n**: die Werte 0, 1, 2 oder 3,
- **m+n**: die Werte 1, 2 oder 3,
- **R¹ und R²**: C₁-C₃₀-Kohlenwasserstoffreste, die substituiert sein können durch Hydroxyl-, Halogen-, Cyanoreste oder Reste der allgemeinen Formel (II)

[(CR³₂)_{b}-O]_{c}(CR⁴₂)_{d}-L-M (II),

in der
- **R³ und R⁴**: einen Wasserstoff-, Methyl- oder Hydroxylrest,
- **b und d**: die Werte 2 oder 3,
- **c**: ganzzahlige Werte von 1 bis 15,
- **L**: einen Rest aus der Gruppe -O-, -COO-, -OOC-, -CONR⁵-, -NR⁶CO- und -CO-,
- **R⁵ und R⁶**: einen Wasserstoff- oder C₁-C₁₀-Alkylrest und
- **M**: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R³** und **R⁴** an jedem Kohlenstoffatom nur einmal ein Hydroxylrest sein können, Kondensaten und Hydrolysaten von Verbindungen der allgemeinen Formel (I) mit einer oder mehreren P-O-P-Bindungen,
mit organischer Zinnverbindung, die ausgewählt wird aus Verbindung der allgemeinen Formel (III)

R¹⁰₄₋ᵣSnXᵣ (III),

Verbindung der allgemeinen Formel (IV)

R¹⁰₂SnY (IV),

Verbindung der allgemeinen Formel (V)

R¹⁰₃SnY_{1/2} (V),

und Verbindung der allgemeinen Formel (VI)

R¹⁰SnY_{3/2} (VI),

in denen
- **R¹⁰**: C₁-C₃₀-Kohlenwasserstoffreste, die substituiert sein können durch Halogen- oder Cyanoreste,
- **X**: Halogen-, -OH, -OR¹⁰, -SR¹⁰, -OOCR¹⁰, -NR¹⁰₂, -NHR¹⁰, -OSiR¹⁰₃ oder -OSi(OR¹⁰)₃,
- **Y**: O oder S und
- **r**: die Werte 1, 2 oder 3 bedeuten,
wobei die Massen 0,01 bis 5 Gew.-% aliphatischen C₁-C₆-Alkohol mit 1 bis 3 Hydroxylgruppen enthalten.

Die zu Elastomeren vernetzbare Massen zeigen gute Lagerstabilität. Es wurde gefunden, dass der Zusatz von aliphatischem Alkohol zu den Massen stabilisierend auf die unter Alkoholabspaltung vernetzenden RTV1-Massen auswirkt. Die zu Elastomeren vernetzbare Massen zeigen deshalb gute Lagerstabilität. Das steht im völligen Gegensatz zur bisherigen Lehrmeinung.

Bei der Zinnverbindung (Z) ist das Zinnatom an die P=O Gruppe aufweisender Phosphorverbindung koordinativ gebunden. Eine kovalente Bindungen zwischen der Phosphorverbindung und dem Zinnatom ist nicht erforderlich, ist aber möglich. Dadurch ist Zinnverbindung (Z) noch in der Lage, die Kondensationsreaktion an den Alkoxysilylendgruppen katalysieren zu können.

Die eingesetzte Phosphorverbindung der allgemeinen Formel (I) ist beispielsweise Tributylphosphat, Tris(2-ethylhexyl)phosphat, Bis(2-ethylhexyl)phosphat, 2-Ethylhexylphosphat, Tris(butoxyethyl)phosphat, Tris(lauryltriethylenglycol)phosphat, Bis(lauryltriethylenglycol)phosphat, Mono (lauryltriethylenglycol) phosphat, Triphenylphosphinoxid, oder Di(polyoxyethylen)hydroxymethylphosphonat. Bevorzugt sind die Triester der Orthophosphorsäure.

Beispiele für die organischen Zinnverbindungen der allgemeinen Formeln (III) bis (VI) sind DBTA, DBTL, oder Umsetzungsprodukte aus DBTA, DBTL und/oder DBTO mit Alkoxysilanen, welche auch erst in situ in der zu Elastomeren vernetzbare Masse umgesetzt werden können.

Der Zinnkatalysator (Z) kann vor Zugabe zur zu Elastomeren vernetzbare Masse hergestellt werden oder erst in der Masse hergestellt werden.

Die zu Elastomeren vernetzbaren Massen sind beliebige Massen, die unter Abspaltung von Alkoholen aus Alkoxysilylendgruppen zu Elastomeren vernetzbar sind. Beispiele hierfür sind Massen auf der Grundlage von Alkoxysilylendgruppen aufweisenden Organopolysiloxanen, Polyethern, Polyestern, Polyurethanen, Polyharnstoffen und Copolymeren aus Organopolysiloxanen, Polyethern, Polyestern, Polyurethanen und Polyharnstoffen. Bevorzugt sind unter Abspaltung von Alkoholen zu Elastomeren vernetzbare Organopolysiloxanmassen, insbesondere einkomponentige Organopolysiloxanmassen (RTV-1-Alkoxymassen).

Bei den unter Abspaltung von Alkoholen zu Elastomeren vernetzbaren einkomponentigen Organopolysiloxanmassen (RTV-1-Alkoxymassen) wird durch Einsatz der Zinnkatalysatoren (Z) die Haftung auf verschieden Untergründen verbessert.

RTV-1-Alkoxymassen enthalten vorzugsweise Alkoxygruppenterminierte Organopolysiloxane (A), insbesondere lineare Diorganosiloxane der allgemeinen Formel (VII)

R¹¹_{f}(R¹²O)_{3-f}Si-(O-SiR₂)_{g}-O-SiR¹¹_{f}(OR¹²)_{3-f} (VII),

worin
- **R, R¹¹ und R¹²**: jeweils einwertige, gegebenenfalls mit Fluor-, Chlor-, Brom-, C₁-C₄-Alkoxyalkyl- oder Cyanogruppen substituierte C₁-C₈-Kohlenwasserstoffreste,
- **f**: die Werte 0 oder 1 und
- **g**: solche Werte bedeutet, die einer Viskosität des Organopolysiloxans (A) von 0,05 bis 1000 Pa.s entsprechen, bedeuten.

Bevorzugt als Reste **R, R¹¹ und R¹²** sind unsubstituierte C₁-C₄-Alkylreste, wobei der Methylrest besonders bevorzugt ist.

Die Organopolysiloxane (A) besitzen vorzugsweise eine Viskosität von 100 bis 700000 mPa.s, insbesondere von 20000 bis 350000 mPa.s, jeweils gemessen bei 23° C.

Vorzugsweise enthalten die RTV-1-Alkoxymassen mindestens 35, insbesondere mindestens 45 Gew.-% und vorzugsweise höchstens 80, insbesondere höchstens 70 Gew.-% Organopolysiloxane (A).

Die vernetzbaren Massen enthalten als aliphatischen C₁-C₆-Alkohol mit 1 bis 3 Hydroxylgruppen bevorzugt Methanol, Ethanol, n-Propanol, i-Propanol, Butanol oder Ethylenglycol, insbesondere Methanol.

Die vernetzbaren Massen enthalten bevorzugt 0,05 bis 2 Gew.-% insbesondere 0,1 bis 1 Gew.-% Alkohol.

Die RTV-1-Alkoxymassen enthalten vorzugsweise Alkoxysilane (B), die insbesondere die allgemeine Formel (VIII)

R¹³_{µ}Si(OR¹⁴)_{4-µ} (VIII),

aufweisen, worin
- **R¹³ und R¹⁴**: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
- **µ**: die Werte 0 oder 1 bedeuten.

Auch Teilhydrolysate von Alkoxysilan (B), welche durch Hydrolyse und Kondensation von insbesondere 2 bis 4 Alkoxysilanen entstanden sind, können anwesend sein. Teilhydrolysate (B) sind beispielsweise Hexamethoxydisiloxan und Hexaethoxydisiloxan.

Vorzugsweise bedeutet R¹³ unsubstituierte C₁-C₆-Kohlenwasserstoffreste, insbesondere Methyl-, Ethyl- und Propylreste.

Vorzugsweise bedeutet **R¹⁴** unsubstituierte C₁-C₆-Kohlenwasserstoffreste, insbesondere Methyl-, Ethyl- Vinyl- und Propylreste.

Vorzugsweise enthalten die RTV-1-Alkoxymassen mindestens 0,01, insbesondere mindestens 0,1 Gew.-% und vorzugsweise höchstens 3, insbesondere höchstens 1 Gew.-% Zinnkatalysator (Z).

Zusätzlich zu den vorgenannten Komponenten können die RTV-1-Alkoxymassen weitere, an sich bekannte Komponenten enthalten, wie Vernetzer, Füllstoffe, Pigmente, lösliche Farbstoffe, Riechstoffe, Weichmacher, Fungicide, harzartige Organopolysiloxane, einschließlich solcher aus (CH₃)₃SiO_{1/2-} und SiO_{4/2-} Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Sigebundene Hydroxylgruppe aufweisendem Diorganopolysiloxan durch Polymerisation der genannten Monomeren mittels freier Radikale erzeugt worden sein können, Korrosionsinhibitoren, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, zugegeben werden.

Vorzugsweise enthalten die RTV-1-Alkoxymassen Füllstoffe. Beispiele für Füllstoffe sind nicht verstärkende Füllstoffe, also Füllstoffe mit einer BET-Oberfläche von bis zu 50 m²/g, wie carbonsäurebelegte Kreiden, Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststofffasern.

Die genannten Füllstoffe können hydrophobiert sein, beispielsweise durch die Behandlung mit Organosilanen bzw. - siloxanen oder mit Stearinsäure oder durch Veretherung von Hydroxylgruppen zu Alkoxygruppen. Es kann eine Art von Füllstoff, es kann auch ein Gemisch von mindestens zwei Füllstoffen eingesetzt werden.

Bei alleiniger Verwendung von verstärkender Kieselsäure als Füllstoff können transparente RTV-1-Alkoxymassen hergestellt werden.

Vorzugsweise enthalten die RTV-1-Alkoxymassen mindestens 2, insbesondere mindestens 5 Gew.-% und vorzugsweise höchstens 40, insbesondere höchstens 15 Gew.-% Füllstoff.

Als Weichmacher können beispielsweise Alkylaromaten oder bei Raumtemperatur flüssige, durch Trimethylsiloxygruppen endblockierte Dimethylpolysiloxane eingesetzt werden.

Bevorzugt ist die Anwesenheit von aminoalkylfunktionellen Silanen als Haftvermittler. Diese fördern die Bildung der Zinnkatalysatoren (Z). Bevorzugt sind Silane der allgemeinen Formel (IX)

A-(CH₂)ₙ-Si(OR¹⁵)₃ (IX),

worin
- **A**: die Bedeutungen NH₂, NH-CH₂CH₂NH₂, NHR und Glycidoxy,
- **n**: die Werte 1 bis 12, insbesondere 1 und 3 und
- **R¹⁵**: die Bedeutung von R aufweist.

Besonders bevorzugt als Haftvermittler ist γ-Aminopropyltriethoxysilan.

Vorzugsweise enthalten die RTV-1-Alkoxymassen 0,5 bis 5, insbesondere höchstens 3 Gew.-% Haftvermittler.

Ebenfalls Gegenstand der Erfindung ist ein Verfahren zur Erhöhung der Lagerstabilität von Zinnkatalysator (Z) enthaltenden, unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist,
wobei die Zinnverbindung (Z) erhältlich ist durch Umsetzung von mit P=O Gruppe aufweisender Phosphorverbindung, die ausgewählt wird aus Phosphorverbindung der allgemeinen Formel (I)

O=PR¹ₘ(OR²)ₙ(OH)₃₋₍ₘ₊ₙ₎ (I),

in der
- **m**: die Werte 0, 1, 2 oder 3,
- **n**: die Werte 0, 1, 2 oder 3,
- **m+n**: die Werte 1, 2 oder 3,
- **R¹ und R²**: C₁-C₃₀-Kohlenwasserstoffreste, die substituiert sein können durch Hydroxyl-, Halogen-, Cyanoreste oder Reste der allgemeinen Formel (II)

[(CR³₂)_{b}-O]_{c}(CR⁴₂)_{d}-L-M (II),

in der
- **R³ und R⁴**: einen Wasserstoff-, Methyl- oder Hydroxylrest,
- **b und d**: die Werte 2 oder 3,
- **c**: ganzzahlige Werte von 1 bis 15,
- **L**: einen Rest aus der Gruppe -O-, -COO-, -OOC-, -CONR⁵-, NR⁶CO- und -CO-,
- **R⁵ und R⁶**: einen Wasserstoff- oder C₁-C₁₀-Alkylrest und
- **M**: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R³** und **R⁴** an jedem Kohlenstoffatom nur einmal ein Hydroxylrest sein können, Kondensaten und Hydrolysaten von Verbindungen der allgemeinen Formel (I) mit einer oder mehreren P-O-P-Bindungen,
mit organischer Zinnverbindung, die ausgewählt wird aus Verbindung der allgemeinen Formel (III)

R¹⁰₄₋ᵣSnXᵣ (III),

Verbindung der allgemeinen Formel (IV)

R¹⁰₂SnY (IV),

Verbindung der allgemeinen Formel (V)

R¹⁰₃SnY_{1/2} (V),

und Verbindung der allgemeinen Formel (VI)

R¹⁰SnY_{3/2} (VI),

in denen
- **R¹⁰**: C₁-C₃₀-Kohlenwasserstoffreste, die substituiert sein können durch Halogen- oder Cyanoreste,
- **X**: Halogen-, -OH, -OR¹⁰, -SR¹⁰, -OOCR¹⁰, -N-R¹⁰₂, -NHR¹⁰, -OSiR¹⁰₃ oder -OSi(OR¹⁰)₃,
- **Y**: O oder S und
- **r**: die Werte 1, 2 oder 3 bedeuten,
wobei den Massen aliphatischer C₁-C₆-Alkohol mit 1 bis 3 Hydroxylgruppen in einer solchen Menge zugesetzt wird, daß die Massen 0,1 bis 5 Gew.-% Alkohol enthalten.

Der Alkohol kann kann vor Zugabe oder Herstellung in der Masse des Zinnkatalysators (Z) zur Masse zugesetzt werden oder erst nach Zugabe oder Herstellung des Zinnkatalysators (Z) zugesetzt werden.

Die Zinnkatalysator (Z) enthaltenden Massen eignen sich ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau, sowie z.B. zur Herstellung von Schutzüberzügen, oder von gummielastischen Formkörpern sowie für die Isolierung von elektrischen oder elektronischen Vorrichtungen.

In den allgemeinen Formeln (I) bis (IX) sind alle Reste **A, L, M, X, Y, R, R¹** bis **R¹⁵** sowie alle Indizes **b, c, d, f, g, m, n,** r und µ unabhängig voneinander gleich oder verschieden.

In allen Formeln gilt die Vierbindigkeit des Siliciumatoms und Zinnatoms sowie die Fünfbindigkeit des Phosphoratoms.
Der Begriff Organopolysiloxane soll im Rahmen der vorliegenden Erfindung dimere, oligomere und polymere Siloxane umfassen.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25° C. Sofern nicht anders angegeben, werden die nachstehenden Beispiele bei einem Druck der umgebenden Atmosphäre, also bei etwa 1000 hPa, und Raumtemperatur, also bei etwa 20° C, bzw. bei einer Temperatur, die sich beim Zusammengeben der Reaktanden bei Raumtemperatur ohne zusätzliche Heizung oder Kühlung einstellt, durchgeführt.

### Beispiele

### Beispiel 1:

In einem Planetenmischer mit Vakuumausrüstung werden unter Wasserausschluß 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit-OSi(CH₃)₃-Endgruppen (Viskosität 100 mPas), 4,0 Gew.-Teilen Methyltrimethoxysilan, 1,0 Gew.-Teilen eines Phosphorsäureester (Gemisch aus Tris(lauryltriethylenglycol)phosphat, Bis(lauryltriethylenglycol)phosphat und Mono(lauryltriethylenglycol)phosphat), 1,0 Gew.Teilen 3-Aminopropyltrimethoxysilan und 0,15 Gew.-Teilen Methanol vermischt. Dann werden 8,0 Gew.-Teile pyrogene Kieselsäure eingemischt und zum Schluß 0,4 Gew.-Teile eines Zinnkatalysators (Umsetzungsprodukt, das aus 4 Teilen Tetraethoxysilan mit 2,2 Teilen Dibutylzinndiacetat hergestellt wurde) zugegeben. Nach Homogenisieren im Vakuum wird der Compound in feuchtigkeitsdichte Gebinde abgefüllt.

### Beispiel 2

Der Versuch des Beispiels 1 wird wiederholt. Anstelle des dort eingesetzten Phosphorsäurresters wird 1 Gew.-Teil Tris(butoxyethyl)phosphat eingesetzt.

### Beispiel 3:

Der Versuch des Beispiels 1 wird wiederholt. Anstelle des dort eingesetzten Phosphorsäurresters wird 1 Gew.-Teil Di(polyoxyethylen)hydroxymethylphosphonat eingesetzt.

## Patentansprüche

1. Zinnkatalysator (Z) enthaltende, unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist,
wobei die Zinnverbindung (Z) erhältlich ist durch Umsetzung von mit P=O Gruppe aufweisender Phosphorverbindung, die ausgewählt wird aus Phosphorverbindung der allgemeinen Formel (I)
O=PR¹ₘ(OR²)ₙ(OH)₃₋₍ₘ₊ₙ₎ (I),
in der
**m** die Werte 0, 1, 2 oder 3,
**n** die Werte 0, 1, 2 oder 3,
**m+n** die Werte 1, 2 oder 3,
**R¹ und R²** C₁-C₃₀-Kohlenwasserstoffreste, die substituiert sein können durch Hydroxyl-, Halogen-, Cyanoreste oder Reste der allgemeinen Formel (II)
[(CR³₂)_{b}-O]_{c}(CR⁴₂)_{d}-L-M (II),
in der
**R³ und R⁴** einen Wasserstoff-, Methyl- oder Hydroxylrest,
**b und d** die Werte 2 oder 3,
**c** ganzzahlige Werte von 1 bis 15,
**L** einen Rest aus der Gruppe -O-, -COO-, -OOC-, -CONR⁵-, -NR⁶CO- und -CO-,
**R⁵ und R⁶** einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste R³ und R⁴ an jedem Kohlenstoffatom nur einmal ein Hydroxylrest sein können, Kondensaten und Hydrolysaten von Verbindungen der allgemeinen Formel (I) mit einer oder mehreren P-O-P-Bindungen,
mit organischer Zinnverbindung, die ausgewählt wird aus Verbindung der allgemeinen Formel (III)
R¹⁰₄₋ᵣSnXᵣ (III),
Verbindung der allgemeinen Formel (IV)
R¹⁰₂SnY (IV),
Verbindung der allgemeinen Formel (V)
R¹⁰₃SnY_{1/2} (V),
und Verbindung der allgemeinen Formel (VI)
R¹⁰SnY_{3/2} (VI),
in denen
**R¹⁰** C₁-C₃₀-Kohlenwasserstoffreste, die substituiert sein können durch Halogen- oder Cyanoreste,
**X** Halogen-, -OH, -OR¹⁰, -SR¹⁰, -OOCR¹⁰, -NR¹⁰₂, -NHR¹⁰, -OSiR¹⁰₃ oder -OSi(OR¹⁰)₃,
**Y** O oder S und
**r** die Werte 1, 2 oder 3 bedeuten,
wobei die Massen 0,01 bis 5 Gew.-% aliphatischen C₁-C₆-Alkohol (A) mit 1 bis 3 Hydroxylgruppen enthalten.

2. Zinnkatalysator (Z) enthaltende Massen nach Anspruch 1, welche Massen auf der Grundlage von Alkoxysilylendgruppen aufweisenden Organopolysiloxanen, Polyethern, Polyestern, Polyurethanen, Polyharnstoffen und Copolymeren aus Organopolysiloxanen, Polyethern, Polyestern, Polyurethanen und Polyharnstoffen sind.

3. Zinnkatalysator (Z) enthaltende Massen nach Anspruch 1 oder 2, welche unter Abspaltung von Alkoholen zu Elastomeren vernetzbare einkomponentige Organopolysiloxanmassen (RTV-1-Alkoxymassen) sind.

4. Zinnkatalysator (Z) enthaltende Massen nach Anspruch 1 bis 3, die 0,1 bis 2 Gew.-% Alkohol (A) enthalten.

5. Zinnkatalysator (Z) enthaltende Massen nach Anspruch 1 bis 4, die 0,05 bis 2 Gew.-% Alkohol (A) enthalten.

6. Verfahren zur Erhöhung der Lagerstabilität von Zinnkatalysator (Z) enthaltenden, unter Abspaltung von Alkoholen aus Alkoxysilylendgruppen zu Elastomeren vernetzbare Massen, die als Katalysator Zinnverbindung (Z) mit einer Koordinationszahl von 5 oder 6 enthalten, in der das Zinnatom mit P=O Gruppe aufweisender Phosphorverbindung koordinativ über deren P=O Gruppe gebunden ist,
wobei die Zinnverbindung (Z) erhältlich ist durch Umsetzung von mit P=O Gruppe aufweisender Phosphorverbindung, die ausgewählt wird aus Phosphorverbindung der allgemeinen Formel (I)
O=PR¹ₘ(OR²)ₙ(OH)₃₋₍ₘ₊ₙ₎ (I),
in der
**m** die Werte 0, 1, 2 oder 3,
**n** die Werte 0, 1, 2 oder 3,
**m+n** die Werte 1, 2 oder 3,
**R¹ und R²** C₁-C₃₀-Kohlenwasserstoffreste, die substituiert sein können durch Hydroxyl-, Halogen-, Cyanoreste oder Reste der allgemeinen Formel (II)
[(CR³₂)_{b}-O]_{c}(CR⁴₂)_{d}-L-M (II),
in der
**R³ und R⁴** einen Wasserstoff-, Methyl- oder Hydroxylrest,
**b und d** die Werte 2 oder 3,
**c** ganzzahlige Werte von 1 bis 15,
**L** einen Rest aus der Gruppe -O-, -COO-, -OOC-, -CONR⁵-, -NR⁶CO- und -CO-,
**R⁵ und R⁶** einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R³** und **R⁴** an jedem Kohlenstoffatom nur einmal ein Hydroxylrest sein können, Kondensaten und Hydrolysaten von Verbindungen der allgemeinen Formel (I) mit einer oder mehreren P-O-P-Bindungen,
mit organischer Zinnverbindung, die ausgewählt wird aus Verbindung der allgemeinen Formel (III)
R¹⁰₄₋ᵣSnXᵣ (III),
Verbindung der allgemeinen Formel (IV)
R¹⁰₂SnY (IV),
Verbindung der allgemeinen Formel (V)
R¹⁰₃SnY_{1/2} (V),
und Verbindung der allgemeinen Formel (VI)
R¹⁰SnY_{3/2} (VI),
in denen
**R¹⁰** C₁-C₃₀-Kohlenwasserstoffreste, die substituiert sein können durch Halogen- oder Cyanoreste,
**X** Halogen-, -OH, -OR¹⁰, -SR¹⁰, -OOCR¹⁰, -NR¹⁰₂, -NHR¹⁰, -OSiR¹⁰₃ oder -OSi(OR¹⁰)₃,
**Y** O oder S und
**r** die Werte 1, 2 oder 3 bedeuten,
wobei den Massen aliphatischer C₁-C₆-Alkohol mit 1 bis 3 Hydroxylgruppen in einer solchen Menge zugesetzt wird, daß die Massen 0,1 bis 5 Gew.-% Alkohol enthalten.

## Claims

1. Compositions which are crosslinkable with elimination of alcohols from alkoxysilyl end groups to give elastomers, and which comprise a tin catalyst (T), and in which the catalyst present is a tin compound (T) having a coordination number of 5 or 6, in which the tin atom has coordinate bonding to the P=O group of a phosphorus compound having a P=O group, the tin compound (T) being obtainable via reaction of a phosphorus compound having a P=O group and selected from phosphorus compounds of the general formula (I)
O=PR¹ₘ(OR²)ₙ(OH)₃₋₍ₘ₊ₙ₎ (I),
where
**m** is the values 0, 1, 2, or 3,
**n** is the values 0, 1, 2, or 3,
**m+n** is the values 1, 2, or 3,
**R¹ and R²** are C₁-C₃₀-hydrocarbon radicals, which may have substitution by hydroxy, halogen, or cyano radicals, or radicals of the general formula (II)
[(CR³₂)_{b}-O]_{c}(CR⁴₂)_{d}-L-M (II),
where
**R³ and R⁴** are a hydrogen radical, methyl radical, or hydroxy radical,
**b and d** are the values 2 or 3,
**c** is integral values from 1 to 15,
**L** is a radical from the group -O-, -COO-, -OOC-, -CONR⁵-, -NR⁶CO-, and -CO-,
**R⁵ and R⁶** are a hydrogen radical or a C₁-C₁₀-alkyl radical, and
**M** is a monovalent C₁-C₂₀-hydrocarbon radical, unsubstituted or substituted with hydroxy, fluoro, chloro, bromo, C₁-C₁₀-alkoxyalkyl, or cyano groups, with the proviso that on each carbon atom only one of the radicals R³ and R⁴ may be a hydroxy radical, condensates and hydrolysates of compounds of the general formula (I) having one or more P-O-P bonds,
with an organic tin compound which is selected from a compound of the general formula (III)
R¹⁰₄₋ᵣSnXᵣ (III),
a compound of the general formula (IV)
R¹⁰₂SnY (IV),
a compound of the general formula (V)
R¹⁰₃SnY_{1/2} (V),
and a compound of the general formula (VI)
R¹⁰SnY_{3/2} (VI),
where
**R¹⁰** is C₁-C₃₀-hydrocarbon radicals, which may have substitution by halogen radicals or by cyano radicals,
**X** is halo, -OH, -OR¹⁰, -SR¹⁰, -OOCR¹⁰, -NR¹⁰₂, -NHR¹⁰, -OSiR¹⁰₃ or -OSi(OR¹⁰)₃,
**Y** is O or S, and
**r** is the values 1, 2, or 3,
where the composition comprises from 0.01 to 5% by weight of an aliphatic C₁-C₆ alcohol (A) having from 1 to 3 hydroxy groups.

2. Compositions comprising a tin catalyst (T), according to claim 1, which are a composition based on compounds having alkoxysilyl end groups, these being organopolysiloxanes, polyethers, polyesters, polyurethanes, polyureas, and copolymers of organopolysiloxanes, polyethers, polyesters, polyurethanes and polyureas.

3. Compositions comprising a tin catalyst (T), according to claim 1 or 2, which are a single-component organopolysiloxane composition crosslinkable with elimination of alcohols to give elastomers (RTV1 alkoxy compositions).

4. Compositions comprising a tin catalyst (T), according to any of claims 1 to 3, which comprise from 0.1 to 2% by weight of alcohol (A).

5. Compositions comprising a tin catalyst (T), according to any of claims 1 to 4, which comprise from 0.05 to 2% by weight of alcohol (A).

6. Process for increasing the storage stability of compositions which are crosslinkable with elimination of alcohols from alkoxysilyl end groups to give elastomers, and which comprise a tin catalyst (T), and in which the catalyst present is a tin compound (T) having a coordination number of 5 or 6, in which the tin atom has coordinate bonding to the P=O group of a phosphorus compound having a P=O group, the tin compound (T) being obtainable via reaction of a phosphorus compound having a P=O group and selected from phosphorus compounds of the general formula (I)
O=PR¹ₘ(OR²)ₙ(OH)₃₋₍ₘ₊ₙ₎ (I),
where
**m** is the values 0, 1, 2, or 3,
**n** is the values 0, 1, 2, or 3,
**m+n** is the values 1, 2, or 3,
**R¹ and R²** are C₁-C₃₀-hydrocarbon radicals, which may have substitution by hydroxy, halogen, or cyano radicals, or radicals of the general formula (II)
[(CR³₂)_{b}-O]_{c}(CR⁴₂)_{d}-L-M (II),
where
**R³ and R⁴** are a hydrogen radical, methyl radical, or hydroxy radical,
**b and d** are the values 2 or 3,
**c** is integral values from 1 to 15,
**L** is a radical from the group -O-, -COO-, -OOC-, -CONR⁵-, -NR⁶CO-, and -CO-,
**R⁵ and R⁶** are a hydrogen radical or a C₁-C₁₀-alkyl radical, and
**M** is a monovalent C₁-C₂₀-hydrocarbon radical, unsubstituted or substituted with hydroxy, fluoro, chloro, bromo, C₁-C₁₀-alkoxyalkyl, or cyano groups, with the proviso that on each carbon atom only one of the radicals R³ and R⁴ may be a hydroxy radical, condensates and hydrolysates of compounds of the general formula (I) having one or more P-O-P bonds,
with an organic tin compound which is selected from a compound of the general formula (III)
R¹⁰₄₋ᵣSnXᵣ (III),
a compound of the general formula (IV)
R¹⁰₂SnY (IV),
a compound of the general formula (V)
R¹⁰₃SnY_{1/2} (V),
and a compound of the general formula (VI)
R¹⁰SnY_{3/2} (VI),
where
**R¹⁰** is C₁-C₃₀-hydrocarbon radicals, which may have substitution by halogen radicals or by cyano radicals,
**X** is halo, -OH, -OR¹⁰, -SR¹⁰, -OOCR¹⁰, -NR¹⁰₂, -NHR¹⁰, -OSiR¹⁰₃ or -OSi(OR¹⁰)₃,
**Y** is O or S, and
**r** is the values 1, 2, or 3,
where the amount of aliphatic C₁-C₆ alcohol having from 1 to 3 hydroxy groups added to the compositions is such that the compositions comprise from 0.1 to 5% by weight of alcohol.

## Revendications

1. Masses contenant un catalyseur à l'étain (E), qui sont réticulables avec élimination d'alcools à partir de groupes alcoxysilyle terminaux pour former des élastomères, contenant en tant que catalyseur un composé d'étain (E) ayant un nombre de coordination de 5 ou 6, où l'atome d'étain est lié de manière coordinative à un composé de phosphore contenant un groupe P=O par l'intermédiaire de son groupe P=O, où le composé d'étain (E) peut être obtenu par réaction d'un composé de phosphore contenant un groupe P=O, et qui est choisi parmi des composés de phosphore de la formule générale (I)
O=PR¹ₘ(OR²)ₙ(OH)₃₋₍ₘ₊ₙ₎ (I)
dans laquelle
m vaut 0, 1, 2 ou 3,
n vaut 0, 1, 2 ou 3,
m+n vaut 1, 2 ou 3,
R¹ et R² représentent des radicaux hydrocarbonés en C₁ à C₃₀, qui peuvent être substitués par des radicaux hydroxyle, halogène cyano ou des radicaux de la formule générale (II)
[(CR³₂)_{b}-O]_{c}(CR⁴₂)_{d}-L-M (II)
dans laquelle
R³ et R⁴ représentent un radical hydrogène, méthyle ou hydroxyle,
b et d valent 2 ou 3,
c est un nombre entier de 1 à 15,
L est un radical du groupe formé par -O-, -COO-, -OOC-, -CONR⁵-, NR⁶CO- et -CO-,
R⁵ et R⁶ représentent un radical hydrogène ou un radical alkyle en C₁ à C₁₀,
M est un radical hydrocarboné monovalent en C₁ à C₂₀, le cas échéant substitué par des groupes hydroxyle, fluoro, chloro, bromo, alcoxyalkyle en C₁ à C₁₀ ou cyano, à la condition que les radicaux R³ et R⁴ ne peuvent, sur chaque atome de carbone, représenter qu'un seul radical hydroxyle, des produits de condensation et des produits d'hydrolyse de composés de la formule générale (I) comportant une ou plusieurs liaisons P-O-P, avec un composé organique d'étain choisi parmi un composé de la formule générale (III)
R¹⁰₄₋ᵣSnXᵣ (III),
un composé de la formule générale (IV)
R¹⁰₂SnY (IV),
un composé de la formule générale (V)
R¹⁰₃SnY_{1/2} (V)
et un composé de la formule générale (VI)
R¹⁰SnY_{3/2} (VI)
dans lesquelles
R¹⁰ est un radical hydrocarboné en C₁ à C₃₀, qui peut être substitué par des radicaux halogène ou cyano,
X est un radical halogéno, -OH, -OR¹⁰, SR¹⁰, -OOCR¹⁰, -NR¹⁰₂, -NHR¹⁰, -OSiR¹⁰₃ ou -OSi(OR¹⁰)₃,
y représente O ou S et
r vaut 1, 2 ou 3,
les masses contenant de 0,01 à 5% en poids d'un alcool aliphatique (A) en C₁ à C₆ comportant de 1 à 3 radicaux hydroxyle.

2. Masses contenant un catalyseur à l'étain (E) suivant la revendication 1, lesquelles masses étant à base d'organopolysiloxanes, de polyéthers, de polyesters, de polyuréthannes, de polyurées et de copolymères d'organopolysiloxanes, de polyéthers, de polyesters, de polyuréthannes et de polyurées présentant des groupes alcosysilyle terminaux.

3. Masses contenant un catalyseur à l'étain (E) suivant la revendication 1 ou 2, qui sont des masses d'organopolysiloxane à un composant (masses RTV l-alcoxylées) réticulables avec élimination d'alcools pour former des élastomères.

4. Masses contenant un catalyseur à l'étain (E) suivant les revendications 1 à 3, contenant de 0,1 à 2% en poids d'alcool (A).

5. Masses contenant un catalyseur à l'étain (E) suivant les revendications 1 à 4, contenant de 0,05 à 2% en poids d'alcool (A).

6. Procédé pour augmenter la stabilité à l'entreposage de masses contenant un catalyseur à l'étain (E), qui sont réticulables avec élimination d'alcools à partir de groupes alcoxysilyle terminaux pour former des élastomères, contenant en tant que catalyseur un composé d'étain (E) ayant un nombre de coordination de 5 ou 6, où l'atome d'étain est lié de manière coordinative à un composé de phosphore contenant un groupe P=O par l'intermédiaire de son groupe P=O, où le composé d'étain (E) peut être obtenu par réaction d'un composé de phosphore contenant un groupe P=O, et qui est choisi parmi un composé de phosphore de la formule générale (I)
O=PR¹ₘ(OR²)ₙ(OH)₃₋₍ₘ₊ₙ₎ (I)
dans laquelle
m vaut 0, 1, 2 ou 3,
n vaut 0, 1, 2 ou 3,
m+n vaut 1, 2 ou 3,
R¹ et R² représentent des radicaux hydrocarbonés en C₁ à C₃₀, qui peuvent être substitués par des radicaux hydroxyle, halogène, cyano ou des radicaux de la formule générale (II)
[(CR³₂)_{b}-O]_{c}(CR⁴₂)_{d}-L-M (II)
dans laquelle
R³ et R⁴ représentent un radical hydrogène, méthyle ou hydroxyle,
b et d valent 2 ou 3,
c est un nombre entier de 1 à 15,
L est un radical du groupe formé par -O-, -COO-, -OOC-, -CONR⁵-, NR⁶CO- et -CO-,
R⁵ et R⁶ représentent un radical hydrogène ou un radical alkyle en C₁ à C₁₀, et
M est un radical hydrocarboné monovalent en C₁ à C₂₀, le cas échéant substitué par des groupes hydroxyle, fluoro, chloro, bromo, alcoxyalkyle en C₁ à C₁₀ ou cyano, à la condition que les radicaux R³ et R⁴ ne peuvent, sur chaque atome de carbone, représenter qu'un seul radical hydroxyle, des produits de condensation et des produits d'hydrolyse de composés de la formule générale (I) comportant une ou plusieurs liaisons P-O-P, avec un composé organique d'étain choisi parmi un composé de la formule générale (III)
R¹⁰₄₋ᵣSnXᵣ (III),
un composé de la formule générale (IV)
R¹⁰₂SnY (IV),
un composé de la formule générale (V)
R¹⁰₃SnY_{1/2} (V)
et un composé de la formule générale (VI)
R¹⁰SnY_{3/2} (VI)
dans lesquelles
R¹⁰ est un radical hydrocarboné en C₁ à C₃₀, qui peut être substitué par des radicaux halogène ou cyano,
X est un radical halogéno, -OH, -OR¹⁰, -SR¹⁰, -OOCR¹⁰, -NR¹⁰₂, -NHR¹⁰, -OSiR¹⁰₃ ou -OSi (OR¹⁰)₃,
y représente O ou S et
r vaut 1, 2 ou 3,
les masses étant additionnées d'un alcool aliphatique C₁ à C₆ comportant de 1 à 3 radicaux hydroxyle, en une quantité telle que les masses contiennent de 0,1 à 5% en poids d'alcool.
